# EUROPÄISCHE PATENTSCHRIFT

(11) **EP 0 841 223 B1**
(45) Veröffentlichungstag und Bekanntmachung des Hinweises auf die Patenterteilung: **02.05.2001**
(21) Anmeldenummer: 97105303.8
(22) Anmeldetag: 27.03.1997
(51) Int. Cl.: B60R 21/20, B60R 21/32

(54) **Cockpitquerträger in einem Kraftfahrzeug**
Dashboard cross beam in a motor vehicle
Traverse de renfort de tableau de bord pour véhicule automobile.

(30) Priorität: 07.11.1996 DE 19645895
(43) Veröffentlichungstag der Anmeldung: 13.05.1998
(73) Patentinhaber: Micro Compact Car smart GmbH, 71272 Renningen (DE)
(72) Erfinder: Henseler, Wolfgang, 71083 Herrenberg (DE); Schick, Ulrich, 72202 Vollmaringen (DE); Fischer, Thomas, 75365 Calw (DE)
(74) Vertreter: Weiss, Klaus

(56) Entgegenhaltungen:
- EP-A- 0 199 024
- DE-A- 1 942 154
- DE-A- 4 328 721
- JP-A- 7 309 196
- US-A- 5 498 025

## Beschreibung

Die Erfindung betrifft einen Cockpitquerträger in einem Kraftfahrzeug gemäß dem Oberbegriff des Anspruches 1.

Aus der FR 2 704 510 A1, die im Oberbegriff des Anspruches 1 berücksichtigt ist, ist ein Cockpitquerträger in einem Kraftfahrzeug bekannt, der mit seinen Enden an den Fahrzeugseiten befestigt ist und zur Stabilisierung des Kraftfahrzeugvorbaues und als Abstützung für daran festgelegte Bauteile dient. So ist an diesem in einem Gehäuse auch ein Airbagmodul befestigt, in welchem ein Gasgenerator gelagert ist, so daß die Entfaltungskräfte des Airbagmodules und die Belastungskräfte auf die Airbaghülle auch in den Cockpitquerträger eingeleitet werden.

Auch in der DE 39 37 377 A1 und der DE 42 20 704 A1 sind derartige Cockpitquerträger beschrieben.

Airbagsensoren werden üblicherweise in einem Gehäuse im Fahrzeuglängstunnel festgelegt.

Die Aufgabe der Erfindung besteht darin, bei der Fertigung eines Kraftfahrzeuges die Ausstattung mit einem Beifahrerairbagsystem zu vereinfachen und die Kosten herabzusetzen.

Die Aufgabe wird durch die kennzeichnenden Merkmale des Patentanspruches 1 gelöst.

Ein im Fahrzeug vorgesehener und stabil ausgeführter Cockpitquerträger, an dem ein Airbagmodul abgestützt befestigt ist, welches einen Gasgenerator und eine Airbaghülle umfaßt, ist außerdem für die Festlegung des Airbagsensors vorbereitet, so daß ein vollständiges Airbagsystem für den Beifahrer am Cockpitquerträger festliegt. Zusätzlicher Bauraum muß damit im Kraftfahrzeug nicht freigehalten werden, und auch die notwendigen Befestigungsmittel werden auf ein Minimum reduziert. Hierdurch wird es außerdem möglich, den Cockpitquerträger vorab, vor dessen Einbau in den Kraftfahrzeugvorbau, mit allen notwendigen Bauteilen für den Beifahrerairbag zu bestücken, und dieses Airbagsystem auf seine Funktionstüchtigkeit vor dem Einbau des Cockpits zu überprüfen, so daß eine umständlicher zu handhabende Überprüfung innerhalb des Kraftfahrzeuges nicht mehr notwendig ist. Auch das nach der Prüfung eventuell notwendig werdende Auswechseln schadhafter Bauteile ist natürlich aufgrund der Zugänglichkeit außerhalb des Kraftfahrzeuges einfacher und schneller zu handhaben.

Die Einformung bzw. Anformung der Aufnahmegehäuse ist bei einem Druckgußquerträger vorteilhaft zu verwirklichen.

Ein Aufnahmegehäuse für den Airbagsensor kann bei der Fertigung des Cockpitquerträgers bereits an- oder eingeformt werden, so daß die Wände des Cockpitquerträgers eventuell zusammen mit einer am Airbagsensor vorgesehenen Abschlußplatte einen abgeschlossenen Raum bilden, in dem der Airbagsensor sicher vor Beschädigung und vor elektromagnetischen Einflüssen geschützt liegt.

Des weiteren können am Cockpitquerträger Fixierungen an- oder eingespritzt werden, so daß das Airbagmodul bei seiner Befestigung eine Ausrichtung erfährt, wie sie dann nach Einbau des Cockpitquerträgers für die zielgerichtete Entfaltung der Airbaghülle notwendig ist. Auch kann vorgesehen werden, das Gehäuse für das Airbagmodul in den Cockpitquerträger einteilig einzuformen, was bei einem Cockpitquerträger aus Leichtmetalldruckguß möglich ist, so daß ein separates Airbaggehäuse eingespart wird, und der Gasgenerator und die Airbaghülle mit der Airbagabdeckung direkt am Cockpitquerträger festgelegt und abgestützt werden können.

Weitere Vorteile und Ausgestaltungen gehen aus den Unteransprüchen und der Beschreibung hervor.

Die Erfindung ist nachstehend anhand einer Zeichnung näher beschrieben.

Es zeigen:
- Fig. 1: einen gegossenen Cockpitquerträger mit einem daran festlegbaren Airbagmodul und einem eingeformten Aufnahmegehäuse für den Airbagsensor,
- Fig. 2: einen Cockpitquerträger mit einem daran festgelegten Airbagsensor,
- Fig. 3: einen Cockpitquerträger mit einem angeformten Aufnahmegehäuse für den Airbagsensor, und
- Fig. 4: einen Cockpitquerträger mit einem angeformten Aufnahmegehäuse mit einem Aufnahmeschlitz für den Airbagsensor.

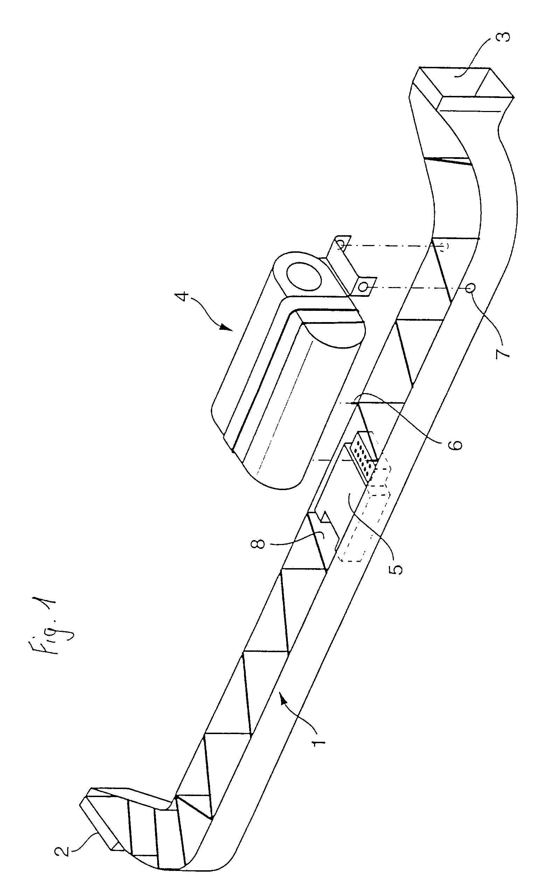

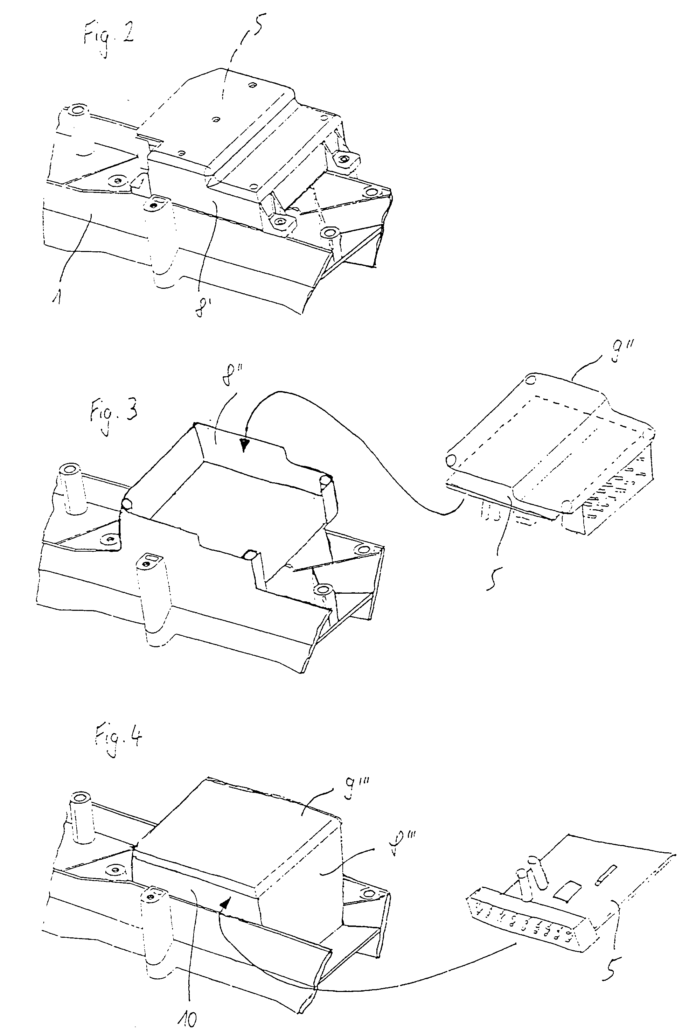

Die Figur 1 zeigt einen Cockpitquerträger 1 in einem nicht näher dargestellten Kraftfahrzeug, der im Vorbau auf Höhe einer Instrumententafel in Fahrzeugquerrichtung ausgerichtet mit je einem Ende 2 bzw. 3 an der linken bzw. rechten Seitenwand des Kraftfahrzeuges z.B. durch eine verschraubung festgelegt ist, und der aufgrund seiner Stabilität zur Befestigung der Instrumententafel, der Heizung und weiterer Aggregate dienen kann. Außerdem ist an diesem Cockpitquerträger 1 ein Airbagmodul 4 sowie der zugehörige Airbagsensor 5 für den Beifahrerairbag abgestützt befestigt, welcher durch den Cockpitquerträger 1 beim Crash angeregt wird. Damit muß im Kraftfahrzeug kein weiterer Bauraum für den Airbagsensor 5 freigehalten werden, und der vorhandene Cockpitquerträger 1 übernimmt die Schutzfunktion gegen eine Beschädigung des Airbagsensors 5 und gewährleistet auch eine günstige Befestigungsmöglichkeit und eine sichere Abstützung des Airbagmodules 4. Der Aufwand für die Bestückung des Cockpitquerträgers 1 mit den Bauteilen des Airbagsystemes ist damit minimiert.

Das Airbagmodul 4 kann am Cockpitquerträger 1 durch an diesem einteilig angeformte Rastnasen 6 und eingeformte Befestigungsbohrungen 7 so fixiert werden, daß das Airbagmodul 4 nach dem Einbau des Cockpitquerträgers 1 in den Kraftfahrzeugvorbau bereits die Stellung einnimmt, die eine korrekte Entfaltung der Airbaghülle gewährleistet.

Des weiteren kann auch ein Gehäuse für den Beifahrerairbag in den Cockpitquerträger 1 bei dessen Fertigung eingeformt werden, worin dann ein Gasgenerator und eine Airbaghülle aufgenommen werden.

Eine derartige Integration mehrerer Aufnahmegehäuse und Befestigungsmöglichkeiten ist durch die Herstellung des Cockpitquerträgers 1 aus Leichtmetalldruckguß zu verwirklichen.

In den Cockpitquerträger 1 ist ein Aufnahmegehäuse 8 eingeformt, in welches der Airbagsensor 5, der eine bestückte Sensorplatine mit elektrischen Anschlüssen aufweist, einsetzbar ist. Der stabile Cockpitquerträger 1 bildet damit ein Schutzgehäuse für die empfindliche Elektronik des Airbagsensors 5 gegen dessen Beschädigung im Fahrbetrieb und beim Crash, und schützt diesen auch vor elektromagnetischen Einflüssen, die die Funktion des Airbagsensors 5 beeinflussen könnten.

In der Fig. 2 ist demgegenüber ein Airbagsensor 5 dargestellt, der in einem Aufnahmegehäuse 8' gelagert ist, welches durch einen Deckel verschlossen wird und am Cockpitquerträger 1 angeschraubt ist.

Die Fig. 3 zeigt ein am Cockpitquerträger 1 angeformtes Aufnahmegehäuse 8'', in das der Airbagsensor 5, der eine Platine mit elektronischen Anbauteilen und einen Stecker umfaßt, entsprechend dem dargestellten Pfeil eingesetzt wird, wonach eine Abdeckplatte 9'' am Airbagsensor 5 das Aufnahmegehäuse 8'' an der offenen Seite verschließt.

Weiterhin ist aus der Fig. 4 ein am Cockpitquerträger 1 angeformtes Aufnahmegehäuse 8''' zu ersehen, welches mit einer Abdeckplatte 9''' versehen nur einen Aufnahmeschlitz 10 für den Einschub des Airbagsensors 5 gemäß dem dargestellten Pfeil bereithält, der dann mit seinem Stecker das Aufnahmegehäuse 8''' verschließt.

Die Festlegung des Airbagmodules und des Airbagsensors 3 gemeinsam am Cockpitquerträger 1 führt zu einer Verringerung der Einbaukosten, da das Airbagsystem für den Beifahrer vorab am Cockpitquerträger 1 vor dessen Einbau im Kraftfahrzeug montiert wird, und dann auch gleich eine Überprüfung der Funktionstüchtigkeit erfolgen kann. Damit müssen die Bestandteile des Airbagsystemes nicht einzeln innerhalb der Fahrzeugkarosserie montiert und wirkverbunden werden. Ein nach der Prüfung eventuell notwendiger Austausch eines nicht funktionierenden Bauteiles kann sofort bei guter Zugänglichkeit vorgenommen werden.

## Patentansprüche

1. Cockpitquerträger (1) in einem Kraftfahrzeug, der im Vorbau auf Höhe einer Instrumententafel in Fahrzeugquerrichtung ausgerichtet ist, mit je einem Ende (2, 3) an den gegenüberliegenden Seiten des Kraftfahrzeugs festgelegt ist, und an dem ein Airbagmodul (4) für den Beifahrer, das einen Gasgenerator und eine Airbaghülle umfaßt, befestigt ist, welches beim Ansprechen eines Airbagssensors (5) aktiviert wird,
**dadurch gekennzeichnet,**
daß der Airbagsensor (5) unmittelbar am Cockpitquerträger (1) gelagert ist.

2. Cockpitquerträger nach Anspruch 1,
**dadurch gekennzeichnet,**
daß in den Cockpitquerträger (1) ein trogförmiges Aufnahmegehäuse (8) für den Airbagsensor (5) eingeformt ist.

3. Cockpitquerträger nach Anspruch 1,
**dadurch gekennzeichnet,**
daß an den Cockpitquerträger (1) ein Aufnahmegehäuse (8", 8''') für den Airbagsensor (5) angeformt ist.

4. Cockpitquerträger nach einem der Ansprüche 2 oder 3,
**dadurch gekennzeichnet**,
daß das Aufnahmegehäuse (8, 8'', 8''') durch die Aufnahme des Airbagsensors (5) geschlossen wird.

5. Cockpitquerträger nach Anspruch 1,
**dadurch gekennzeichnet,**
daß das Airbagmodul (4) und der Airbagsensor (5) am Cockpitquerträger (1) eine vormontierte Einheit bildend, vor dem Einbau des Cockpitquerträgers (1) auf Funktionstüchtigkeit überprüfbar sind.

6. Cockpitquerträger nach Anspruch 1,
**dadurch gekennzeichnet**,
daß der Cockpitquerträger (1) Fixierungen (6, 7) aufweist, durch die das Airbagmodul (4) bei seiner Befestigung selbsttätig ausgerichtet wird.

7. Cockpitquerträger nach Anspruch 1,
**dadurch gekennzeichnet,**
daß ein Gehäuse für das Airbagmodul (4) in den Cockpitquerträger (1) eingeformt ist.

## Claims

1. A transverse cockpit member (1) in a motor vehicle and which is aligned in the transverse direction in the forward part of the vehicle at the level of an instrument panel, with ends (2, 3) fixed on the opposite sides of the motor vehicle and on which there is fixed an air bag module (4) for the passenger which comprises a gas generator and an air bag casing and which is activated by the response of an air bag sensor (5), characterised in that the air bag sensor (5) is mounted directly on the transverse cockpit member (1).

2. A transverse cockpit member according to claim 1, characterised in that a trough-shaped housing (8) for accommodating the air bag sensor (5)is integrally moulded into the transverse cockpit member (1).

3. A transverse cockpit member according to claim 1, characterised in that a receiving housing (8", 8"') for the air bag sensor (5) is integrally moulded on the transverse cockpit member (1).

4. A transverse cockpit member according to one of claims 2 or 3, characterised in that the accommodating housing (8, 8", 8"') is closed by the reception of the air bag sensor (5).

5. A transverse cockpit member according to claim 1, characterised in that the air bag module (4) and the air bag sensor (5) on the transverse cockpit member (1), forming a preassembled unit, can be checked for proper functioning capacity prior to installation of the transverse cockpit member (1).

6. A transverse cockpit member according to claim 1, characterised in that the transverse cockpit member (1) has fixings (6, 7) by which the air bag module (4) is automatically aligned when it is fitted.

7. A transverse cockpit member according to claim 1, characterised in that a housing for the air bag module (4) is integrally formed into the transverse cockpit member (1).

## Revendications

1. Traverse de cockpit (1) dans un véhicule automobile, orientée dans la direction transversale du véhicule, dans la partie avant, au niveau d'un tableau de bord, fixée respectivement à chaque extrémité (2, 3) sur les côtés opposés du véhicule automobile, et auquel est fixé un module de sac gonflable (4) prévu pour le passager, comprenant un générateur de gaz et une enveloppe de sac gonflable, qui est activé en cas de réaction d'un capteur de sac gonflable (5),
caractérisée en ce que le capteur de sac gonflable (5) est monté directement sur la traverse de cockpit (1).

2. Traverse de cockpit selon la revendication 1,
caractérisée en ce qu'un boîtier de logement (8) en forme d'auge est façonné en creux dans la traverse de cockpit (1), pour le capteur de sac gonflable (5).

3. Traverse de cockpit selon la revendication 1,
caractérisée en ce qu'un boîtier de logement (8'', 8''') pour le capteur de sac gonflable (5) est façonné, d'un seul tenant par la matière, sur la traverse de cockpit (1).

4. Traverse pour cockpit selon l'une des revendications 2 ou 3, caractérisée en ce que le boîtier de logement (8'', 8''') est fermé par le fait de loger le capteur à sac gonflable (5).

5. Traverse pour cockpit selon la revendication 1,
caractérisée en ce que l'aptitude fonctionnelle du module de sac gonflable (4) et celle du capteur pour sac gonflable (5), formant un ensemble prémonté sur la traverse de cockpit (1), sont vérifiables avant le montage de la traverse de cockpit (1).

6. Traverse pour cockpit selon la revendication 1,
caractérisée en ce que la traverse de cockpit (1) présente des fixations (6, 7) au moyen desquelles le module de sac gonflable (4) est orienté automatiquement au moment de sa fixation.

7. Traverse de cockpit selon la revendication 1,
caractérisée en ce qu'un boîtier pour le module de sac gonflable (4) est formé dans la traverse de cockpit (1).
